Europäisches Patentamt

European Patent Office

Office européen des brevets

(11) Publication number: **0 449 408 A2**

# EUROPEAN PATENT APPLICATION

(21) Application number: **91300911.4**

(22) Date of filing: **05.02.91**

(30) Priority: **28.03.90 US 500726**

(43) Date of publication of application:
**02.10.91 Bulletin 91/40**

(84) Designated Contracting States:
**AT BE CH DE DK ES FR GB GR IT LI LU NL SE**

(51) Int. Cl.⁵: **G06F 13/40**

(71) Applicant: **ADVANCED MICRO DEVICES, INC.**
**901 Thompson Place P.O. Box 3453**
**Sunnyvale, CA 94088(US)**

(72) Inventor: **McMinn Brian D.**
**918 Acorn Oaks Dr.**
**Austin, Texas 78745(US)**
Inventor: **Gupta, Smeeta**
**19444 Dehavilland Dr.**
**Saratoga, California 95070(US)**

(74) Representative: **Sanders, Peter Colin**
**Christopher et al**
**BROOKES & MARTIN High Holborn House**
**52/54 High Holborn**
**London WC1V 6SE(GB)**

(54) System adaptable for managing data.

㊿ A system for managing data in response to instructions from a computing device which is especially adaptable for managing data phrases formed of a plurality of data words. The system includes a double-precision data operation unit, a register unit for storing at least a portion of the data phrase, data buses for communicating the various data, and a clock source for establishing time intervals for synchronization of operation of the system. The data buses are connected with the data operation unit and the register unit. The data operation unit, the register unit, the data bus, and the clock source cooperate to successively input appropriate data words of a given data phrase at the data operation unit in correct hierarchical arrangement during selected successive time intervals.

## BACKGROUND OF THE INVENTION

The present invention is directed to a system adaptable for managing data, and particularly to a system for fetching data from a storage device and managing that data in response to instructions from a computing device. In its preferred embodiment, the system is used for managing both single-precision data phrases comprising one data word and double-precision data phrases which are comprised of two data words. Specifically, the present invention contemplates handling 32-bit single-precision data phrases and 64-bit double-precision data phrases, each of which double-precision data phrases is comprised of a high-order 32-bit data word and a low-order 32-bit data word.

The system is constructed to interface with an external storage device having a 32-pin connector, so that the system manages double-precision data phrases in a manner whereby the high-order 32-bit data word of a double-precision data phrase is fetched first from the external memory device and loaded into a register latch. During the next clock cycle the associated low-order 32-bit data word for the data phrase being loaded is routed directly to a floating point (double-precision) operating unit at the low-order side of a designated internal bus of that operating unit. Simultaneously during the second clock cycle, the high-order 32-bit data word is loaded into the high-order side of the same designated internal bus of the floating point operating unit from the register latch.

In such manner, the entire 64 bits of the double-precision data phrase is loaded in appropriate hierarchical order within the floating point operating unit utilizing only a 32-bit data bus from the external memory device.

Next to storage devices, one of the most real estate-intensive elements employed in manufacturing a semiconductor chip is the data bus. Because of considerations of inductive coupling, capacitive coupling, and the like, data buses occupy a significant amount of real estate on a chip.

If one were to design a data management system for handling only 64-bit double-precision data phrases, the system structure which would effect the most efficient loading of data per clock cycle would employ a 64-bit data bus from a 64-bit wide data storage device. However, in view of the inordinate amount of real estate which data buses occupy, and in view of a general trend in industry to efficiently utilize real estate in order to realize the benefits of miniaturization, employing a 32-bit data bus is desirable. However, using a 32-bit data bus involves a trade-off since loading a 64-bit double-precision data phrase will necessarily occur less efficiently with a 32-bit data bus. Such a trade-off is acceptable, however, when a data management device is intended to handle both single-precision and double-precision data phrases. Of course, the trade-off is an even lesser important design consideration when the data management device will execute a majority of its instructions using single-precision (32-bit) data phrases.

In the present specification we describe a structure for efficient data management of 64-bit double-precision data phrases which allows loading of all 64 bits of a data phrase in a double-precision operating unit, in the proper hierarchical order of bits, in two clock cycles while utilizing only a 32-bit data bus interface with an external memory device.

In particular, there is described a system adaptable for managing data in response to instructions from a computing device. The system is especially adaptable for managing data phrases formed of a plurality of data words, each of which data words is comprised of a plurality of data units. The system includes at least one data operation unit for performing operations on the data phrases, at least one register unit for storing at least a portion of the data phrase to be operated upon by the data operation unit, and at least one data bus for communicating the various data. The data bus is operatively connected with the data operation unit and the register unit. The system further includes a clock source for establishing time intervals for synchronization of operation of the system. The data operation unit, the register unit, the data bus, and the clock source cooperate to successively input appropriate data words of a given data phrase at the data operation unit in correct hierarchical arrangement during selected successive time intervals.

Accordingly, there is provided a system for managing data which efficiently uses space in its layout while maintaining efficiency in its operation.

The system can effect operations using single data words or data phrases comprising two data words.

In the accompany drawings, by way of example only, the sole figure is a schematic diagram of a data managing system embodying the present invention.

Referring to this figure, the data managing system 10 is comprised of an external interface device 12 which is intended for interface with a memory device (not shown). System 10 is responsive to instructions from a computing device (not shown) in fetching data from the memory device and performing operations upon that fetched data. System 10 further comprises an operating unit 14, which is preferably a double-precision, floating point operating unit. Operating unit 14 is configured to accommodate data phrases containing 64 bits of data information, which data bits are arranged in hierarchical order of significance. Operating unit 14 includes a plurality of internal buses 16, each of which internal buses 16 is configured to have a most-significant part (MSP) preferably comprising bits 63-32 and a least-significant part (LSP) preferably comprising bits 31-0. Operating unit 14 further includes a data latch 18 which is connected only to the least-significant part of internal bus 16 via an internal feeder bus 20. Latch 18 receives information from a first input data bus 22; first input data bus 22 is operatively connected to an interface data bus 24. Interface data bus 24 is operatively connected to external interface device 12.

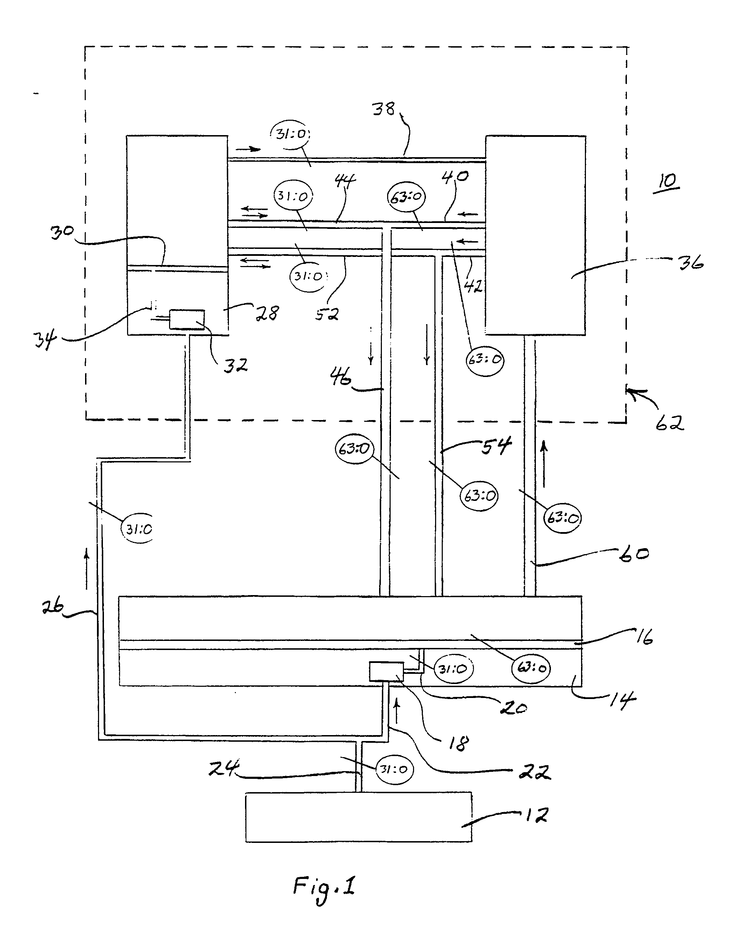

In Fig. 1, double-precision 64-bit buses are indicated by "63:0"; single-precision, 32-bit buses are indicated by "31:0".

Also connected to internal data bus 24 is a second input data bus 26, and second input data bus 26 is connected to an operating unit 28. Operating unit 28 is preferably a single-precision, integer operating unit which has a plurality of internal buses 30 and a data latch 32. Data latch 32 is connected to internal buses 30 via an internal feeder bus 34, and data latch 32 receives data from second input data bus 26. First input data bus 22, interface data bus 24, and second input data bus 26 are preferably 32-bit data buses.

Latch 18 is connected only to the least-significant parts of internal buses 16 of operating unit 14. By not providing an internal feeder bus to the most-significant parts of internal buses 16 significant savings in real estate and simplicity of layout are realized, with their consequent savings in manufacturing costs and simplicity of manufacture.

System 10 also includes a primary register 36, which is preferably a plurality of 64-bit wide registers.

Single-precision operating unit 28 provides single-precision (32-bit) data to primary register 36 by a 32-bit transfer data bus 38. Primary register 36 provides single-precision (32-bit) or double-precision (64-bit) data by 64-bit transfer data buses 40 and 42.

Transfer data bus 40 is operatively connected to a 32-bit transfer data bus 44 for providing data to single-precision operating unit 28 and is operatively connected to a 64-bit transfer data bus 46 for providing data to double-precision operating unit 14. Transfer data bus 46 is operatively connected to the least-significant parts and to the most-significant parts of internal data buses 16.

Similarly, transfer data bus 42 is operatively connected to a 32-bit transfer data bus 52 for providing data to single-precision operating unit 28 as well as being operatively connected to a 64-bit transfer data bus 54 for providing data to double-precision operating unit 14. Transfer data bus 54 is operatively connected to the least-significant parts and to the most-significant parts of internal data buses 16. Operating unit 14 provides data to primary register 36 by a 64-bit transfer data bus 60.

In operation, operating unit 14, when it looks toward single-precision operating unit 28 and primary register 36, effectively sees a single register 62, as indicated generally by the dashed-line box in Fig. 1.

System 10 is capable of managing double-precision (64-bit) data for use by double-precision operating unit 14 through 32-bit data buses 22, 24, 26 which are operatively connected to external interface device 12. In response to instructions from a computing device (not shown), the most-significant 32-bit data word of a 64-bit double-precision data phrase is loaded first from external data device 12 and is directed to data latch 32 in single-precision operating unit 28. The least-significant 32-bit data word of the 64-bit data phrase to be operated upon is next loaded from external interface device 12 through 32-bit data buses 24, 22 to data latch 18 and thence to internal data bus 16 in the least-significant part of the internal bus 16 via 32-bit internal feeder bus 20. During the subsequent clock cycle, the most-significant 32-bit data word of the data phrase is communicated from single-precision operating unit 28 either through data buses 44, 46 or through data buses 52, 54 to the most-significant part of data bus 16.

In such manner, both 32-bit data words associated with a 64-bit double-precision data phrase arrive at double-precision operating unit 14 during the same clock cycle, arranged in appropriate hierarchical significance order on internal bus 16, and ready for operations to be performed by double-precision operating unit 14. The entire 64-bit data phrase transfer occurs in two clock cycles even though the connection between system 10 and the memory device (not shown) is effected through single-precision-capable 32-bit interface data bus 24.

Certainly all the data buses of system 10 could be designed as 64-bit data buses, thereby saving a clock cycle in double-precision data phrase management by directly loading both the most-significant and least-significant 32-bit data words of a data phrase directly from an external memory device to double-precision operating unit 14. However, such an employment of an additional 64-bit data bus network to replace the 32-bit data network 22, 24, 26 of system 10 involves significantly greater real estate and other design problems, such as possibly increased inductive coupling, capacitive coupling, requirements for shielding from radio interference, and the like.

Employment of a 64-bit data bus to directly load both the most-significant and least-significant 32-bit data words of a double-precision data phrase into operating unit 14 would also require additional internal feeder buses within operating unit 14 to the most-significant part of internal data buses 16. Thus, further complexity of design and real estate occupancy would be encountered.

System 10 is preferably designed to handle both single-precision and double-precision data, and in the main performs single-precision operations, double-precision operations being a relatively small proportion of the operations performed by system 10. In such a situation, the sacrifice of one additional clock cycle to load a relatively infrequently-occurring double-precision data phrase is a preferable design trade-off to greater complexity and real estate occupancy which would be required if the interface between system 10 and an external memory device would be effected using a 64-pin connector with associated 64-bit data buses.

Thus, the preferred embodiment of system 10 is efficiently designed to effect speedy management of single-precision and double-precision data phrases while realizing benefits of greater simplicity and greater compactness in its structure.

It is to be understood that, while the detailed drawing and specific examples given describe preferred embodiments of the invention, they are for the purpose of illustration only, that the apparatus of the invention is not limited to the precise details and conditions disclosed and that various changes may be made therein without departing from the spirit of the invention which is defined by the following claims:

## Claims

1. A system adaptable for managing data, the system fetching said data from a storage device and effecting said managing in response to instructions from a computing device, said data comprising a plurality of data units, one or more of said data units forming a data word, one or more of said data words forming a data phrase, the system comprising:

   at least one data operation means for performing operations using said data;

   at least one register means for storing said data;

   a plurality of data bus means for communicating said data, said plurality of data bus means being operatively connected with said at least one data operation means, said storage device, and said at least one register means; and

   at least one clock means for establishing a plurality of time intervals;

   said instructions including an identifying means for identifying correct placement of a particular of said plurality of data words within a respective of said plurality of data phrases;

   said at least one data operation means and said at least one register means cooperating to each accept input of selected of said plurality of data words and effect presentation of appropriate of said plurality of data words comprising a respective of said plurality of data phrases at said at least one data operation means according to said correct placement during selected of said plurality of time intervals.

2. A system adaptable for managing data as recited in Claim 1 wherein said plurality of data units comprises a plurality of binary bits.

3. A system adaptable for managing data as recited in Claim 1 wherein said at least one data operation means comprises one data operation means.

4. A system adaptable for managing data as recited in Claim 3 wherein said data operation means comprises a floating point data operation means.

5. A system adaptable for managing data as recited in Claim 1 wherein said at least one register means comprises one register means.

6. A system adaptable for managing data as recited in Claim 1 wherein said at least one register means comprises a primary register and a buffer register, said buffer register being associated with an integer data operation unit.

7. A system adaptable for managing data as recited in Claim 1 wherein said at least one clock means comprises one clock means.

8. A system adaptable for managing data as recited in Claim 1 wherein said presentation occurs during a single of said time intervals.

9. A system adaptable for managing data as recited in Claim 2 wherein said at least one data operation means comprises a floating point data operation means.

10. A system adaptable for managing data as recited in Claim 9 wherein said at least one register means comprises a primary register and a buffer register, said buffer register being associated with an integer data operation unit.

11. A system adaptable for managing data as recited in Claim 10 wherein said at least one clock means comprises one clock means.

**12.** A system adaptable for managing data as recited in Claim 13 wherein said presentation occurs during a single of said time intervals.

**13.** A system adaptable for managing data, the system fetching said data from a storage device and effecting said managing in response to instructions from a computing device, said data comprising a plurality of binary bits, one or more of said binary bits forming a plurality of data words, the system comprising:

an external input means for inputting data to the system;

at least one first data operation means for performing first operations using said data;

at least one second data operation means for performing second operations using said data;

a plurality of data bus means for communicating said data;

at least one clock means for synchronizing communication of said data;

said at least one first data operation means, said at least one second data operation means, and said at least one clock means cooperating to communicate substantially simultaneously said plurality of data words from said external input means to said first data operation means by means of said at least one data bus.

**14.** A system adaptable for managing data, said data comprising a plurality of data words, each of said plurality of data words comprising one or more binary bits, the system comprising:

at least one external input means for inputting said data to the system;

a first data management means for performing first operations using said data, said first data management means comprising at least one first latch means for latching said data;

a second data management means for performing second operations using said data, said second data management means comprising at least one second latch means for latching said data;

a clock means for providing at least one clock signal;

a control means for controlling operation of the system synchronously with said clock signal;

a data bus means for communicating said data, said data bus means being operatively connected with said external input means, said first data management means, and said second data management means;

each respective data word of said plurality of data words including one or more identifying means for identifying significance of said respective data word, said identifying means comprising one or more of said plurality of binary bits;

said control means cooperating with said first and second latch means to control communication of said data in a word-wise fashion, said respective data words having a first significance being communicated from said external input means to said first latch means in such a manner that said data words comprising a first degree of said significance are communicated directly to said first data management means and data words of a second degree of said significance are communicated to said first data management unit via said second data management unit, said data words having said first degree of significance and said data words having said second degree of significance arriving at said first data management unit substantially simultaneously.

Fig.1